# EUROPÄISCHE PATENTSCHRIFT

(11) **EP 1 666 389 B1**
(45) Veröffentlichungstag und Bekanntmachung des Hinweises auf die Patenterteilung: **10.09.2008**
(21) Anmeldenummer: 04028804.5
(22) Anmeldetag: 04.12.2004
(51) Int. Cl.: B65G 47/244

(54) **Verfahren zum Ausrichten von Produkten**
A method for orienting articles
Méthode pour orienter des articles

(43) Veröffentlichungstag der Anmeldung: 07.06.2006
(73) Patentinhaber: Stieffenhofer, Reiner, 56072 Koblenz (DE)
(72) Erfinder: Rommersbach, Roland, 56070 Koblenz (DE)

(56) Entgegenhaltungen:
- EP-A- 0 179 537
- DE-A1- 4 418 359
- US-A- 5 191 962
- US-A- 5 193 659
- US-A1- 2004 035 684

## Beschreibung

Die Erfindung bezieht sich auf ein Verfahren zum Ausrichten von Produkten mittels periodischer Geschwindigkeitswechsel von Einzelrollen in einem Rollenpaket, um diese Produkte für einen Nachfolgeprozess vorzubereiten.

### Stand der Technik

Stückige Produkte, die reihenweise produziert und durch den Weitertransport in eine Unordnung gebracht werden, müssen für eine Vielzahl an Folgeprozessen wieder in eine Ordnung gebracht werden. Dies kann mit sogenannten Richtlinealen, die über eine Erkennung der Einzelreihe verfügt, realisiert werden oder über eine geschwindigkeitsgesteuerte Doppelpulnose in jedem Einzelstrang in der Produktionsreihe. Dabei ist die mechanische Beanspruchung der Produkte meist sehr hoch. Außerdem ist der Platzbedarf ein großer Störfaktor.

Die vorliegende Erfindung geht aus von einem aus US-A-5193659 bekannten Verfahren zum Ausrichten von Produkten, bei dem die über ein Rollenbett laufenden Produkte in eine Reihenformation gebracht werden. Der Effekt wird durch relative Rotationsgeschwindigkeiten der aneinander gereihten Walzen erzeugt.

Bei diesem Verfahren wird es als Nachteil angesehen, dass die Realisierung einer solchen Anordnung der Rollen einen erheblichen Konstruktionsaufwand enthält. Weiterhin werden zur Erzielung des Effekts eine hohe Anzahl von Motoren verwendet was einen großen Kostenaufwand beinhaltet.

Aufgabe der Erfindung ist, das bekannte Verfahren dahingehend zu verbessern, dass die Produkte auf kürzestem Weg in größtmöglicher Geschwindigkeit mit einem Höchstmass an Genauigkeit und einem Minimum an mechanischer Beanspruchung ausgerichtet werden. Weiterhin wird der Konstruktionsanteil und die Notwendigkeit von kostspieligen Bauteilen erheblich minimiert.

### Darstellung der Erfindung

Mit dem in der Erfindung erzielten Effekt, der von mehreren hintereinander geschalteten, periodisch gesteuerten Rollenpaketen realisiert wird, ist es möglich auf kürzestem Weg und mit sehr hoher Geschwindigkeit Produkte, die in ungeordneten Reihen angeliefert werden, in exakt aneinander folgende Reihen auszurichten. Empfindliche Stückgüter werden bei diesem Prozess nicht beschädigt und mit einem Maximum an Sorgfalt und Effizienz ausgerichtet.

Um den Effekt der Erfindung zu erzielen, werden Rollenpakete mit jeweils vier Rollen aneinander gereiht. Jede einzelne Rolle im Paket nimmt in Folge einer Periode vier unterschiedliche Drehzahlen an. Eine Periode bezieht sich immer auf einen Produktionstakt. Die Drehzahl der Rolle wird von der Grundgeschwindigkeit her gesehen nach Ablauf von jeweils ¼ der Periode zunächst zweimal reduziert und dann auf einen Wert der über der Grunddrehzahl liegt erhöht. Nach Ablauf der gesamten Periode wird die Periode wiederholt.

Die drei weiteren Rollen in dem Rollenpaket verhalten sich in der Periode wie die erste Rolle, wobei die Drehzahl jeweils um ¼ zur Nachbarrolle versetzt ist. Um den Effekt ausreichend stark auszuprägen, ist es notwendig mindestens fünf Rollenpakete mit dem beschriebenen Verhalten hintereinander zu schalten. Der Antrieb erfolgt dabei über vier Motoren, die für den Antrieb von jeweils einer Rolle im Rollenpaket zuständig sind. Die Rollen sind über Ketten mit dem nächsten Rollenpaket verbunden um exakt das gleiche Verhalten der Rollenpakete zu erzielen.

Dies wirkt sich folgendermaßen auf ankommende Produkte aus. Die in sich verzogene Reihe trifft auf das Rollenbett und wird zunächst auf diesem weitertransportiert. Da sich die Periode zeitlich gesehen auf den Produktionstakt bezieht, wird eine Synchronisation mit den angelieferten Reihen und dem Periodenwechsel der Maschine erzeugt.

Dabei ist es dann so, dass vorliegende Produkte durch die niedrige Drehzahl der Rolle zunächst eingebremst werden. Nachkommende Produkte werden aber gleichzeitig durch die schneller laufende Rolle beschleunigt und dadurch vorgeschoben. Ist die Reihe synchron mit dem Periodenwechsel, ist diese auch gerade ausgerichtet.

In der Zeichnung ist ein Ausführungsbeispiel der Erfindung dargestellt, welches nachfolgend näher erläutert werden soll. Hierbei zeigen
- Figur 1: die Darstellung der Drehzahlen innerhalb einer Zeitperiode und
- Figur 2: die Darstellung der Rollenpakete in einem horizontalen Querschnitt durch das Förderband.

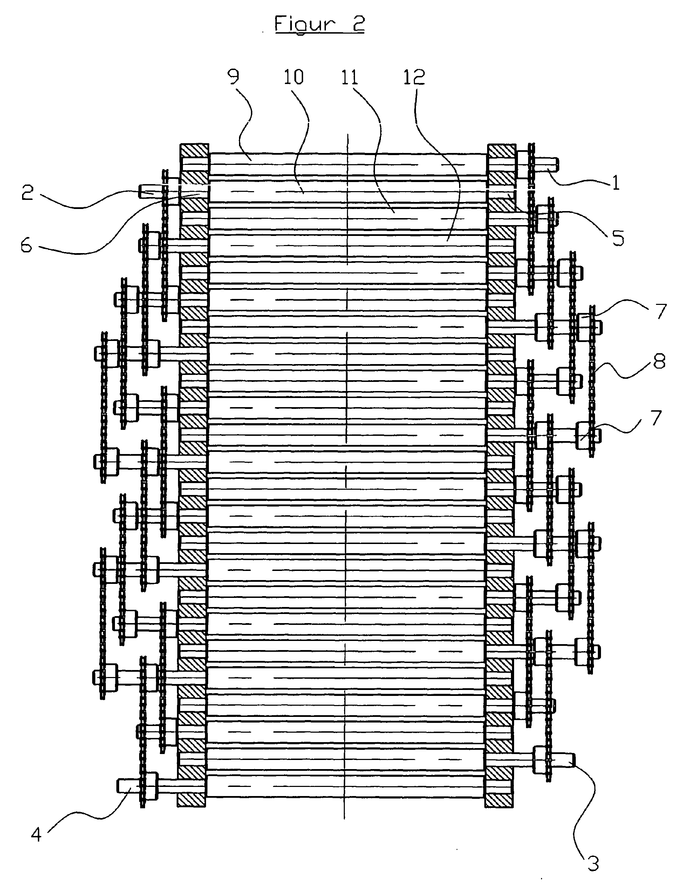

Um den mechanischen Antrieb der Rollen gemäß **Figur 2** realisieren zu können, müssen die Rollen auf beiden Seiten seitlich gelagert werden **5, 6 .** Die Lagerung wird dabei so ausgeführt, dass jeweils jede zweite Achse der Rolle auf einer Seite **6** durchgeführt werden kann, um ein Zahnrad **7** aufzunehmen. Die jeweils erste Achse auf den vier Eckpunkten **1, 2, 3, 4** des Rollenbettes werden über ein geeignetes Antriebsmittel mit einem der vier Motoren verbunden. Die Drehbewegung der Rolle wird über ein Zahnrad **7** und einer Kette **8** zu der entsprechenden Achse im nächsten Rollenpaket übertragen.

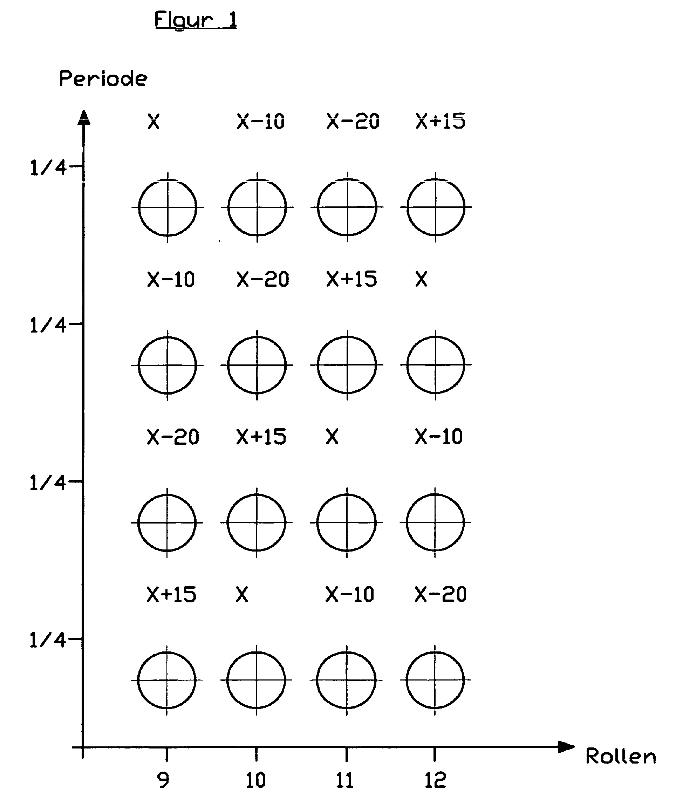

Bei der in **Figur 1** gezeigten Darstellung der Drehzahlen werden als Antriebe handelsübliche Drehstrommotoren eingesetzt, die mit einer Rückführung (Resolver) ausgestattet sind. Die Steuerung der Perioden und Zeitabschnitte erfolgt über vier handelsübliche Servo Frequenzumrichter. Die Frequenzumrichter werden alle über einen Systembus miteinander verbunden. Einer von den Frequenzumrichtern (im folgenden Master genannt) übernimmt die Masterfunktion, alle anderen (im folgenden Slave genannt) werden als Slave programmiert.

Da die Programmierung mit allen busfähigen Servo Frequenzumrichtern möglich ist, wird im Folgenden nur auf die Steuerung der Periode eingegangen. Hierbei wird die Ablaufzeit T einer Periode in vier gleiche Teile aufgeteilt. Der Master wird so programmiert, dass er über eine Grundgeschwindigkeit verfügt, die über ein Potentiometer eingestellt wird. Mit einem intern programmierten Offset werden die drei weiteren Geschwindigkeiten realisiert. Alle 1/4T wechselt der Master auf die nächste vorgegebene Geschwindigkeit. Die Slave Frequenzumrichter bekommen vom Master ein Leitfrequenzsignal das alle 1/4T ein Signal zum Geschwindigkeitswechsel ausgibt. Die Geschwindigkeiten der Slave Antriebe verhalten sich dabei genauso wie die des Masterantriebs. Allerdings sind die Startdrehzahlen bei den Slave Antrieben immer um eine Position versetzt.

## Patentansprüche

1. Verfahren zum Ausrichten von Produkten mittels periodischer Geschwindigkeitswechsel von Einzelrollen (9, 10, 11, 12) in einem Rollenpaket mit Hilfe von Frequenzumrichtern,
**dadurch gekennzeichnet, dass**
• Rollenpakete bestehend aus jeweils vier Rollen (9), (10), (11), (12) aneinander gereiht werden, wobei
• jede einzelne Rolle (9), (10), (11), (12) im Paket in Folge einer bestimmten Periode vier unterschiedliche Drehzahlen annimmt,
• die Drehzahl von einer der Rollen (9), (10), (11), (12) von der Grundgeschwindigkeit nach Ablauf von ¼ der Periode zunächst zweimal reduziert und dann auf einen Wert erhöht wird, der über der Grunddrehzahl liegt, und
• die drei weiteren Rollen (10), (11), (12) in dem Rollenpaket sich in der Periode wie die erste Rolle (9) verhalten, wobei die Drehzahl jeweils um ¼ der Zeitperiode zur Nachbarrolle (10), (11), (12) versetzt ist.

## Claims

1. Method to orientate articles by means of periodic speed changes of individual rollers (9), (10), (11), (12) in a group of rollers using frequency converters; **characterized in that**
• roller groups each consisting of four rollers (9), (10), (11), (12) aligned to one another, whereby
• each roller (9), (10), (11), (12) in the roller group is capable to run at four different speeds as the result of a specific rotational period,
• the rotational speed of one of the rollers (9), (10), (11), (12) will be decreased twice from the basic speed after expiry of one fourth of the rotational period and then increased to a rate that is above the basic rotational speed and
• the three other rollers (10), (11), (12) in the roller group perform in the same way as the first roller (9), whereby the rotational speed of each roller is shifted by one fourth of the rotational period as compared to the respective adjacent roller (10), (11), (12).

## Revendications

1. Méthode pour orienter des articles par des changements périodiques de vitesse des rouleaux particuliers (9), (10), (11), (12) intégrés dans un groupement de rouleaux à l'aide des convertisseurs de fréquence, **caractérisée en ce que**
• des groupements de rouleaux comprenant quatre rouleaux (9), (10), (11), (12) alignés l'un après l'autre, ainsi que
• chaque rouleau particulier (9), (10), (11), (12) dans un groupement est capable de tourner à quatre vitesses différentes par suite d'une certaine période,
• le nombre de tours des rouleaux (9), (10), (11), (12) est d'abord réduit deux fois après le déroulement d'un quart de la période et puis augmenté à tourner à une vitesse dépassant le nombre de tours de base;
• les autres trois rouleaux (10), (11), (12) dans le groupement de rouleaux se comportant comme le premier rouleau (9), sauf que le régime soit décalé par un quart de la période par rapport au rouleau avoisinant (10), (11), (12).
